# EUROPÄISCHE PATENTSCHRIFT

(11) **EP 1 422 033 B1**
(45) Veröffentlichungstag und Bekanntmachung des Hinweises auf die Patenterteilung: **14.01.2009**
(21) Anmeldenummer: 03026788.4
(22) Anmeldetag: 21.11.2003
(51) Int. Cl.: B27B 27/08, B23D 47/04

(54) **Plattensäge mit Anschlag**
Panel saw with guide fence
Scie à panneaux avec guide

(30) Priorität: 22.11.2002 DE 10254854; 03.06.2003 DE 10325063
(43) Veröffentlichungstag der Anmeldung: 26.05.2004
(73) Patentinhaber: Otto Martin Maschinenbau GmbH & Co., 87724 Ottobeuren (DE)
(72) Erfinder: Martin, Max Dipl.-Ing., 87724 Ottobeuren (DE)
(74) Vertreter: Pfister, Stefan Helmut Ulrich

(56) Entgegenhaltungen:
- DE-A- 3 921 680
- DE-U- 9 320 990
- DE-U- 9 418 519

## Beschreibung

Die Erfindung betrifft eine Format- bzw. Plattensäge mit einem Sägetisch und einem im Sägetisch gelagerten Sägeblatt und mit einem auf mindestens einer Führung gelagerten Anschlag. Eine Säge gemäß dem Oberbegriff von Anspruch 1 ist aus der DE 3921680 bekannt.

Formatsägen sowie auch Plattensägen benötigen für ihren Einsatz zum Zuschneiden von Platten Anschlageinrichtungen. Diese müssen zum einen das exakte Parallelschneiden auf genaue Maße bis zu mehreren hundert Zentimetern ermöglichen. Zum anderen sollen genaue Winkelschnitte von 0° bis 90° nach beiden Seiten hergestellt werden können.

Bei den aus dem Stand der Technik bekannten Format- bzw. Plattensägen werden diese beiden Forderungen bisher mit zwei verschiedenen Einrichtungen gelöst. Dazu muß die Format- bzw. Plattensäge für die jeweilige Bearbeitungsart entsprechend umgerüstet werden. So sind beispielsweise Parallelanschläge bekannt, die an Format- bzw. Plattensägen angeordnet werden. Mittels dieser Parallelanschläge können dann die zu bearbeitenden Werkstücke parallel zum Sägetisch bzw. zur Schnittlinie des Sägeblattes zugeschnitten werden.

Es sind auch Winkelanschläge bekannt, welche an Format- bzw. Plattensägen angeordnet werden können. Mittels dieser Winkelanschläge ist dann der winklige Zuschnitt der zu bearbeitenden Werkstücke, insbesondere von Platten, möglich. Die Umrüstung der Format- bzw. Plattensägen von der einen Anschlagart zur anderen ist dabei recht aufwendig. Winkelanschläge sind zudem, insbesondere wenn sie sehr hohe Genauigkeitsanforderungen erfüllen sollen, entweder als linke oder als rechte Winkelanschläge bekannt. Damit ist es auch hier erforderlich, die Winkelanschläge entsprechend der jeweiligen Anschlagart umzurüsten.

Aus der Druckschrift DE 42 31 110 A1 ist eine Tischsäge mit winkelverstellbarem Anschlag bekannt, die dem zuvor beschriebenen Stand der Technik zuzuordnen ist. Der Anschlag ist in einer Kulissenführung zwangsgeführt in einem begrenzten Winkelbereich einstellbar. Aufgrund der Kulissenführung ist nur eine Winkelverstellung zwischen 0 und 45 Grad möglich. Die Winkeleinstellung nach beiden Seiten bezüglich der Sägeschnittlinie ist nicht möglich. Dazu muß wie aus dem Stand der Technik bekannt, auch hier ein Umbau vorgenommen werden, derart, daß ein Schiebeschlitten mit einer genau umgekehrten Anordnung der Drehpunkte und der Kulisse des Anschlages vorgesehen ist. Diese Arbeiten sind sehr zeitaufwendig, wodurch die gesamte Umbauarbeit unrentabel wird, insbesondere, wenn häufig wechselnde Sägeschnitte durchgeführt werden sollen. Eine parallele Verschiebung des Anschlages bezüglich der Sägeschnittlinie ist nicht ermöglicht. Ebenso ist die Durchführung von Parallelschnitten mit der in der Offenlegungsschrift vorgestellten Lösung nicht gegeben.

Aus der Druckschrift DE 39 21 680 A1 ist eine Plattensäge mit einem Sägetisch bekannt. Die Plattensäge weist ein im Sägetisch gelagertes Sägeblatt auf, wodurch eine Schnittlinie definiert wird. Es ist weiterhin ein Anschlag für die Plattensäge vorgesehen, der auf einer Führung um einen Drehpunkt drehbar, längsbeweglich verschiebbar und fixierbar ist.

Aus der deutschen Gebrauchsmusterschrift G 94 18 519.0 ist eine Handkreissäge mit einer quer zum Sägeblatt verschiebbaren, am Sägeschuh arretierten Halterung für eine Anschlagschiene bekannt. Der so bekannte Anschlag ist drehbar und verschiebbar. Es ist jedoch nicht möglich, den Anschlag bezüglich des Drehpunktes zu verschieben. Es ist ebenso nicht möglich, die Anschlagkante bezüglich der Sägeschnittlinie exakt zu positionieren. Die in der Druckschrift vorgestellte Lösung ist durch eine sehr instabile Befestigung gekennzeichnet, wodurch Ungenauigkeiten nicht zu vermeiden sind. Weitere Ungenauigkeiten ergeben sich durch die an der Vorrichtung vorgesehenene Verstelleinrichtungen. Die Reichweite für den Anschlag ist zudem sehr begrenzt, was wiederum zu recht hohen Ungenauigkeiten bei der Durchführung von entsprechenden Sägeschnitten führen kann. Für die Anordnung eines derartigen Anschlages an einer im Werkstattbetrieb eingesetzten Format- und Plattensäge ist der aus der Gebrauchsmusterschrift G 94 18 519.0 bekannte Anschlag bzw. die Halterung für die Anschlagschiene nicht einsetzbar. Die Verschiebbarkeit des Anschlages parallel zur Sägeschnittlinie ist gemäß einer Ausführungsform nur in sehr begrenztem Abstand möglich.

Ausgehend von dem zuvor beschriebenen Stand der Technik, ist es Aufgabe der Erfindung, eine Format- bzw. Plattensäge zur Verfügung zu stellen, bei der die aufwendigen Umrüstarbeiten für die Anschläge zur Durchführung von Schnitten in beidseitigen Winkellagen und Parallelschnitten nicht notwendig sind.

Erfindungsgemäß wird diese Aufgabe durch eine Format- bzw. Plattensäge mit einem Sägetisch und einem im Sägetisch gelagerten Sägeblatt, mit einer durch das Sägeblatt definierten Schnittlinie und einem auf wenigstens einer Führung gelagerten Anschlag, gelöst, der auf einer Führung um einen Drehpunkt drehbar, längsbeweglich verschiebbar und fixierbar angeordnet ist, wobei ein Auflager an der Führung vorgesehen ist und das Auflager auf der Führung bewegbar ist und die Format- beziehungsweise Plattensäge sich dadurch auszeichnet, daß die Führung an wenigsten einem Wagen vorgesehen ist, der parallel zur Schnittlinie bewegbar angeordnet ist. Dadurch ist daß der Anschlag sowohl linksseitig, rechtsseitig und auch parallel zur vom Sägeblatt, definierten Schnittlinie ausrichtbar. Durch diese Lösung gelingt es nunmehr ohne aufwendige Umrüstarbeiten, mittels der erfindungsgemäßen Format- bzw. Plattensäge linksseitige Plattenschnitte, Parallelschnitte und auch rechtsseitige Plattenschnitte zu ermöglichen. Die Erfindung schlägt mit ihrer Lösung vor, daß ein und derselbe Anschlag, sowohl als Parallelanschlag, wie auch als winkelanschlag ausgebildet ist. Durch diesen erfindungsgemäßen Vorschlag wird erreicht, daß die aufwendigen Umrüstarbeiten, wo zwischen zwei bzw. drei unterschiedlichen Anschlageinrichtungen zu wechseln war, eingespart werden. Die erfindungsgemäße Anordnung bietet letztendlich einen Multifunktionsanschlag an, der es erlaubt, das Werkstück unter jeden beliebigen Winkel bezüglich des Sägeblattes zu schneiden.

Erfindungsgemäß ergibt sich weiterhin ein sehr wesentlicher Unterschied zum Stand der Technik, derart, daß bei eingestellter Winkellage eine Relativbewegung parallel zur Sägeschnittlinie bei Beibehaltung des eingestellten Winkels ermöglicht ist. Dabei ist gesichert, daß der Referenzpunkt des Anschlages die Sägeschnittlinie nicht schneidet. Damit erreicht die erfindungsgemäße Lösung gegenüber dem Stand der Technik eine noch effizientere Einstellmöglichkeit bezüglich des jeweils einzustellenden Winkels und bezüglich der Entfernung zur Sägeschnittlinie. Damit werden auch parallel Schnitte in sehr genauer Ausführung in wesentlich weiterem Abstand zur Sägeschnittlinie ermöglicht, als dies beim Stand der Technik bisher bekannt war.

Ein anderer, wertvoller Aspekt ist erfindungsgemäß dadurch angegeben, daß der Anschlag, unabhängig von Winkel und Position, sicher die Sägeschnittlinie nicht schneidet. Dies wird z.B. durch den zuvor beschriebenen Effekt erreicht oder durch eine längsaxiale Verschiebung rechtwinklig zur Sägelinie des Anschlages.

Die Erfindung ist sowohl mittels bekannter mechanischer gegebenenfalls händisch zu bedienenden Verstellvorrichtungen in relativ einfacher Ausführung als auch mit elektromotorisch bzw. elektronisch gesteuerten Systemen für gehobene Ansprüche realisierbar.

Entsprechend einer Weiterbildung der Erfindung ist es vorgesehen, daß der Anschlag sowohl parallel zu der Schnittlinie sowie auch in einem Winkel hierzu ausrichtbar ist. Somit werden die zuvor beschriebenen Effekte noch wesentlich besser erreicht, als dies nach dem Stand der Technik bisher gegeben war.

Erfindungsgemäß ist es entsprechend einer Weiterbildung vorgesehen, daß der Drehpunkt auf der Führung längsbeweglich, insbesondere rechtwinklig zur Sägelinie, angeordnet ist. Diese Längsbeweglichkeit ermöglicht dann die Veränderung des Abstandes des Drehpunktes bezüglich der Sägeschnittlinie. Insbesondere wird auch die zur Sägelinie rechtwinklige Ausgestaltung eine beliebige Einsetzbarkeit der Erfindung bei Parallelschnitten erreicht, da der Anschlag auf jedes gewünschte Parallelmaß entlang der Führung positionierbar ist.

Ein weiterer Aspekt der Erfindung ist dadurch angegeben, daß der Drehpunkt fest auf der Führung angeordnet ist und dafür aber der Anschlag bezüglich des Drehpunktes verschiebbar ist. Insbesondere ist vorgesehen, daß der Anschlag im Drehpunkt längsverschieblich festlegbar ist und im übrigen keine weitere Führung aufweist. Durch eine solche Anordnung ist eine hohe Beweglichkeit des Anschlages in Bezug auf die Winkeleinstellung möglich. Das Drehgelenk, welches im Drehpunkt angeordnet ist, weist dabei z.B. eine entsprechend stabil ausgestaltete Klemmung auf, aufgrund derer es möglich ist, den Anschlag längsverschiebbar festlegbar auszugestalten.

Dadurch wird erreicht, daß der Anschlag ebenfalls immer so positionierbar ist, daß er die gedachte Sägeschnittlinie nicht schneidet. Selbstverständlich ist es auch vorgesehen, eine Kombination der beiden zuvor beschriebenen Lösungen dahingehend vorzusehen, daß der Drehpunkt auf der Führung längsbeweglich angeordnet ist und gleichzeitig der Anschlag bezüglich des Drehpunktes verschiebbar ist.

Eine vorteilhafte Weiterbildung der Erfindung zeichnet sich dadurch aus, daß der Anschlag um 360° auf dem Drehpunkt drehbar angeordnet ist. Damit ist eine universelle Einstellung des Anschlages in jeder Winkellage nunmehr erfindungsgemäß ermöglicht.

Ein Meßsystem, welches den Abstand des Anschlages zur Schnittlinie misst und gegebenenfalls über eine Steuerung anzeigt, daß der Anschlag bzw. ein am Anschlagsende vorgesehener Referenzpunkt in Kollision mit der Schnittlinie sich befindet, zeichnet eine Weiterbildung der erfindungsgemäßen Format- und Plattensäge aus.

Dabei ist es von Vorteil, wenn das Meßsystem mittels an dem Anschlag gemessener Werte, wie der Größe der Winkellage oder des Abstandes des Anschlages zur Schnittlinie bzw. zu einem anderen Referenzpunkt der Säge, die Kollision von Anschlag bzw.

Referenzpunkt mit der Schnittlinie bestimmt, auswertet und anzeigt bzw. gemäß einer Weiterbildung gleichzeitig motorisch derart verstellt, daß der Referenzpunkt die Schnittlinie nicht schneidet.

Das Meßsystem umfasst in seiner einfachsten Ausgestaltung nur entsprechende Meßanordnungen zur Ermittlung der jeweiligen Dimensionen. Gegebenenfalls schließt sich daran eine einfache Auswertung an, um z.B. die trigoniometrischen Funktionen zu verrechnen und entsprechende Werte anzuzeigen. In einer weiteren Variante der Erfindung ist daher vorgesehen, daß eine Steuerung vorgesehen ist, wobei es sich hierbei entweder um die Maschinensteuerung oder um eine Positioniersteuerung oder eine Steuerung, die Teil des Meßsystemes sein kann, handelt. Diese Steuerung umfasst dabei z.B. eine Anzeige, auf welcher die Winkellage des Anschlages und gegebenenfalls auch gleichzeitig oder alternativ die relative Lage des Anschlages zur Sägelinie anzeigbar ist. Ein wesentlicher Vorteil der erfindungsgemäßen Ausgestaltung liegt insbesondere darin, daß die Anordnung sowohl für Winkelschnitte, wie auch für Parallelschnitte ohne lästige Umbauarbeiten einsetzbar ist. Die beiden relevanten Werte für diese Bearbeitungen können dabei gleichzeitig oder wahlweise auf der Anzeige angezeigt werden.

Selbstverständlich ist es nach einer erfindungsgemäßen Variante auch vorgesehen, daß das Meßsystem eine Steuerung aufweist, die an dem Drehpunkt und an einer für den Anschlag definierten Achse aufgrund der Winkellage des Anschlages den Referenzpunkt derart verstellt, daß eine Kollision mit der Schnittlinie vermieden wird. Vorzugsweise positioniert die Steuerung, das vordere Ende des Anschlages bzw. dessen Referenzpunkt jeweils in Abhängigkeit des Winkels so, daß das vordere Ende des Anschlages bzw. der Referenzpunkt nicht in einer Stellung ist, die Schnittlinie des Sägeblattes schneidet.

Dabei ist es auch von Vorteil, wenn zwischen dem Anschlag und der Führung bzw. dem Auflager eine Führungswelle angeordnet ist. Durch die so beschriebenen Lösungsvarianten wird die Flexibilität bzw. Variabilität des gesamten Anschlagsystems wesentlich verbessert.

Eine vorteilhafte weiterbildung der zuvor beschriebenen Lösungen sieht vor, daß die Führung bzw. das Auflager durch ein Gelenk mit der Führungswelle verbunden ist.

Der Anschlag ist dabei entsprechend einer Variante der Erfindung verschiebbar an der Führungswelle angeordnet. Selbstverständlich ist es erfindungsgemäß auch ermöglicht, daß die Führungswelle in dem Gelenk verschiebbar gelagert ist.

Erfindungsgemäß ist es jetzt abgegeben, daß neben der händischen Verstellmöglichkeit auch mehrere durch Motoren bewegliche Achsen erfindungsgemäß vorgesehen sind, die jeweils entsprechende Meßsysteme besitzen und die Steuerung somit sicherstellt, daß die gewünschte wickellage eingestellt ist und die Sägeschnittlinie nicht geschnitten wird. Im weiteren sind die Einstellmöglichkeiten bezüglich des Winkels gegenüber allen bisher bekannten Lösungen aus dem Stand der Technik wesentlich verbessert. Die Lösungen aus dem Stand der Technik waren entweder auf eine Führung auf einem Parallelogrammtisch angewiesen oder auf eine Lagerung in einem Kreisbogensegment, wobei nicht eine der Lösungen eine parallele verschiebbarkeit bei gleichzeitiger Winkelfixierbarkeit zeigt. Weiterhin ergibt sich erfindungsgemäß der Vorteil einer sehr flexiblen Einstellmöglichkeit in beide Richtungen. Auch dies war nach dem Stand der Technik nur durch den Umbau bzw. Wechsel der jeweiligen Vorrichtungen ermöglicht. Erfindungsgemäß ist nunmehr die Einstellung des Winkels in beide Richtungen, also links und rechts, ohne aufwendige Umbauarbeiten ermöglicht. Erfindungsgemäß ist es weiterhin von Vorteil, daß der Abstand zur Sägeschnittlinie wesentlich variabler gestaltbar ist. Auch in der einfachsten Ausführung mit nur einer Auflage, wie zuvor beschrieben, werden die zuvor beschriebenen Vorteile gegenüber dem Stand der Technik erreicht.

Die Aufgabe der Erfindung wird auch gelöst durch eine Format- bzw. Plattensäge mit einem Sägetisch und einem am Sägetisch gelagerten Sägeblatt, mit einem Anschlag, der am Sägetisch geführt ist und für genaue Winkelschnitte von 0**°** bis 180° bezogen auf die Schnittlinie des Sägeblattes positionierbar ist. Entsprechend dieser Lösung sind Winkelschnitte von 0° bis 180° bezogen auf die Schnittlinie des Sägeblattes ermöglicht. Egal ob linksseitige oder rechtsseitige Schnitte auszuführen sind oder ob Parallelschnitte bezogen auf die Schnittlinie des Sägeblattes gefordert sind, ist dies durch wenige Handgriffe für die Einrichtung des Anschlages nunmehr ermöglicht. Das bisher sehr aufwendige Umrüsten von Parallelanschlag zu Winkelanschlag entfällt durch die erfindungsgemäße Lösung.

Eine Weiterbildung der erfindungsgemäßen Format- bzw. Plattensäge zeichnet sich dadurch aus, daß der Anschlag auf der Führung längsbeweglich und/oder drehbar gelagert ist.

In einer ersten sehr einfachen Ausgestaltung wird vorgesehen, daß der Anschlag nur auf einer Führung gelagert ist. Diese einfache Variante der Erfindung löst bereits die eingangs gestellte Aufgabe.

Ein weiterer Aspekt der erfindungsgemäßen Format- beziehungsweise Plattensäge ist dadurch angegeben, daß an beziehungsweise auf dem Auflager ein Drehteller angeordnet ist, der um eine Achse um 360° drehbar ist und der den Anschlag trägt. Durch diese Ausführungsform mit Drehteller und daran beziehungsweise darauf angeordnetem Anschlag sind Winkeleinstellungen universell in beide Richtungen bezogen auf die Schnittlinie beziehungsweise auf den Sägetisch möglich. Diese Weiterbildung der einfachsten Ausführungsform ist dann von Vorteil, wenn beispielsweise nur eine Führung vorgesehen ist, auf der das Auflager mit dem Dehteller rechtwinklig zur Schnittlinie geführt ist. Dadurch, daß der Anschlag auf dem Drehteller drehbar angeordnet ist und gleichzeitig auch verschieblich und der Drehteller mit dem Auflager bezogen zur Schnittlinie S ebenfalls beweglich ist, lassen sich alle Winkeleinstellungen des Anschlages in Bezug auf die Schnittlinie des Sägeblattes realisieren, wobei gleichzeitig gewährleistet ist, daß der Anschlag auf den Referenzpunkt an der Schnittlinie des Sägeblattes einstellbar ist, derart, daß der Anschlag nicht mit seinem, der Schnittlinie zugewandtem Ende diese überschneidet.

Eine vorteilhafte Weiterbildung der Erfindung zeichnet sich dadurch aus, daß an dem Anschlag mindestens ein Distanzstück vorgesehen ist, welches in Richtung zum Sägetisch beziehungsweise zur Schnittlinie weist. So können beispielsweise zwei Distanzstücke an dem Anschlag links und rechts angebracht werden, um Maße innerhalb des Sägetisches bis Null erreichen zu können. Das dadurch veränderte Maß wird selbstverständlich dann in einem vorhandenen Meßsystem der Längsführung korrigiert. Dies ist sowohl händisch als auch maschinell beziehungsweise gesteuert, entsprechend der Ausstattung der jeweiligen Formatbeziehungsweise Plattensäge ermöglicht.

Erfindungsgemäß wurde auch gefunden, daß es von Vorteil ist, wenn das Auflager als Tisch ausgebildet ist, der eine kreisförmige Führungsöffnung aufweist, die vorzugsweise im Zentrum des Auflagers angeordnet ist, wobei die Führungsöffnungen einen Drehteller beziehungsweise ein Drehtellersegment aufnimmt, derart, daß der Drehteller um 360° in der Führungsöffnung drehbar gelagert ist, und der Anschlag auf dem oder an dem Drehteller beziehungsweise dem Drehtellersegment verschiebbar gelagert ist.

Dabei ist es weiterhin von Vorteil, wenn mindestens eine Auflage vorgesehen ist, auf der der Anschlag und/oder das zu bearbeitende Werkstück aufliegt. Dies ist insbesondere bei Ausführungsformen der erfindungsgemäßen Format- beziehungsweise Plattensäge von Vorteil, welche mit einer schmalen Führung arbeiten, die nicht genügend Auflagefläche für das zu bearbeitende Werkstück bietet.

Eine Weiterbildung der erfindungsgemäßen Lösung zeichnet sich dadurch aus, daß der Anschlag von zwei Führungen geführt ist, deren Abstand zueinander veränderbar ist. Mittels einer derartigen Lösung werden insbesondere die Stabilitätsanforderungen, welche an einen links- bzw. rechtsseitigen oder einen Parallelanschlag gestellt sind, noch besser gelöst, als mit den zuvor beschriebenen Lösungen. Durch die beabstandete Anordnung von zwei Führungen erhält der Anschlag insgesamt eine größere Auflagefläche bzw. mehrere Auflagepunkte, über die das Eigengewicht des Anschlages selbst sowie der Werkstücke besser abgefangen wird.

Eine Weiterbildung der Erfindung sieht vor, daß jede der Führungen je über ein Auflager den Anschlag trägt. Durch diese Ausbildung wird erreicht, daß die Positionierung des Anschlages insgesamt weiter erleichtert wird.

Entsprechend einer vorteilhaften Weiterbildung der erfindungsgemäßen Lösung ist es vorgesehen, daß die Führungen als Wagen ausgebildet sind.

Ein weiterer Aspekt der erfindungsgemäßen Lösung zeichnet sich dadurch aus, daß die Führung bzw. die Führungen parallel zur Schnittlinie beweglich und positionierbar sind. Die Führung kann dabei an einer parallel zum Sägetisch angeordneten Führungsschiene erfolgen.

Entsprechend einer vorteilhaften Weiterbildung wurde auch gefunden, daß es von Vorteil ist, wenn eine Meßstange vorgesehen ist, die zur Ermittlung der Position der Führung bzw. Führungen bzw. deren Abstand zueinander dient. Die Meßstange dient zur Positionsbestimmung der Führung bzw. der Bestimmung des Abstandes der beiden Führungen. Die Meßstange ist dabei zum Beispiel elektronisch ausgebildet, um eine automatische Positionsermittlung zu erlauben. Natürlich ist es auch möglich, die Meßstange als ablesbare Zentimeterskala auszubilden.

Gemäß eines weiteren Vorschlags der erfindungsgemäßen Lösung ist es vorgesehen, daß je ein Auflager auf der bzw. den Führungen verschiebbar angeordnet ist. Dabei ist es von Vorteil, wenn zwischen dem Anschlag und der Führung bzw. dem Auflager eine Führungswelle vorgesehen ist. Durch den Einsatz der Führungswelle ist es möglich, den Anschlag bezüglich der Führung im gewissen Abstand zu positionieren, wodurch sich die Beweglichkeit des Anschlages erhöht.

Dabei ist es weiterhin von Vorteil, wenn die Führung bzw. das Auflager durch ein Gelenk mit der Führungswelle verbunden ist.

Ein weiterer Aspekt der erfindungsgemäßen Format- bzw. Plattensäge ist dadurch gekennzeichnet, daß die Führungswelle auf der Führung in dem Auflager bzw. an dem Gelenk längenveränderbar verschieblich gelagert ist. Es wurde auch gefunden, daß es von Vorteil ist, wenn das Gelenk als Kreuzgelenk ausgeführt ist.

Erfindungsgemäß ist es auch vorgesehen, daß der Anschlag verschiebbar an Anschlagbefestigungen der Führungswellen angeordnet ist.

Dabei hat es sich als vorteilhaft erwiesen, wenn das Gelenk, die Führungswelle und die Anschlagbefestigungen mindestens eine Fixiervorrichtung bzw. Feststelleinrichtung zur Fixierung bzw. Arretierung der beweglichen Elemente aufweisen. Dies ist insbesondere deshalb günstig, um während des Schneidevorganges eine ausreichende Stabilität der eingestellten Anschlagsart und des Winkels zu erreichen.

Es ist dabei auch vorgesehen, daß der Abstand der Führungen zueinander mittels einer entsprechenden Feststellvorrichtung fixierbar ist. Der Abstand der Führungen bleibt dabei während des gesamten Schneidvorganges unverändert und stabil. Eine solche Feststellvorrichtung ist zum Beispiel durch entsprechend teleskopierbare Verbindungen zwischen den Führungen möglich, die ein Aussteifen bei eingestellter Winkellage erlaubt.

Zur Einstellung der Platten bzw. Werkstückslänge ist es vorgesehen, daß der Anschlag mit einer mechanischen und/oder einer elektronischen Skala ausgestattet ist. Dadurch ist es ermöglicht, in sehr einfacher Weise das jeweilige Maß an dem Anschlag selbst einzustellen.

Von besonderem Vorteil ist es dabei, wenn an dem Anschlag selbst ein Längenanschlag vorgesehen ist, an dem das Werkstück angelegt wird.

Eine Weiterbildung der erfindungsgemäßen Format- bzw. Plattensäge zeichnet sich dadurch aus, daß die Führung bzw. das Auflager motorisch angetrieben und positionierbar sind. Hierdurch wird eine Einstellung des Anschlags auf die jeweilige Anschlagsart erleichtert. Günstigerweise ist hierbei eine Steuerung vorgesehen, die die jeweilige Position der Führung beziehungsweise der Auflage bzw. des Anschlages überwacht und regelt. Hierbei ist es auch von Vorteil, wenn ein elektronisch auswertbares Meßsystem beziehungsweise eine Meßstange vorgesehen ist. Gegebenenfalls sind auch Antriebe für die Rotation des Anschlages um den Drehpunkt bzw. des Anschlages auf seiner Führung rechtwinklig zur Sägelinie vorgesehen. Grundsätzlich ist die Erfindung sehr variabel ausgestaltbar. Es ist nicht zwingend vorgesehen, daß alle antreibbaren Achsen auch entsprechend angetrieben werden müssen, wodurch gegebenenfalls der Komfort der Maschine entsprechend erhöht werden kann, die Maschine dadurch aber auch aufwendiger und teurer wird. Grundsätzlich ist es möglich, die Anordnung auch handbetrieben zu betreiben, wobei aber durch die Maßerfassung des Meßsystemes eine entsprechende Verrechnung der aufgenommenen Meßwerte zur Darstellung der jeweils werkstückspezifischen Parameter vorgesehen ist.

In einer weiteren, erfindungsgemäßen Ausgestaltung ist vorgesehen, daß der motorische Antrieb des Auflagers derart arretierbar ist, daß der Antrieb als Fixiervorrichtung wirkt und so der ausgewählte Winkel sicher beibehalten wird.

Entsprechend einer vorteilhaften Ausgestaltung ist es vorgesehen, daß eine elektronische Steuerung für die Positionierung der Führungen, der Auflager und des Anschlages vorgesehen ist. Die Steuerung rechnet dabei, ausgehend von der vorgenommenen Winkeleingabe, aus, welche Position die Führungen und das Auflager jeweils einzunehmen haben, um den entsprechenden Winkel zu gewährleisten. Nachdem die Steuerung das Maß errechnet hat, wird automatisch, beispielsweise durch die entsprechenden motorischen Antriebe, die jeweilige errechnete Position eingestellt. Die Einstellung kann auch mechanisch, händisch erfolgen. Dabei zeigt die Steuerung an, ob die richtige Einstellung vorgenommen wurde.

Dabei hat es sich weiterhin als Vorteil erwiesen, wenn die Steuerung die Position der Führungen, den Abstand zwischen den Führungen sowie die Stellung der Auflager und des Anschlages elektronisch erfasst und digital auswertet.

Ein weiterer Aspekt der erfindungsgemäßen Format- bzw. Plattensäge ist dadurch angegeben, daß die Verstelllänge der Führungswellen zwischen ihren Endlagen als Maschinenkonstante in der Steuerung hinterlegt ist. Es ist beispielsweise gemäß einer vorteilhaften Weiterbildung der Erfindung vorgesehen, die Führungswelle nur in den jeweiligen Endlagen für die Winkeleinstellung einzusetzen. Wird die Führungswelle aber nur in diesen zwei Endlagern eingesetzt, so reicht es aus, die jeweilige Verstelllänge als Maschinenkonstante in der Steuerung zu hinterlegen.

Insbesondere dann, wenn die Führungswelle ein eigenes Meßund/oder Positionierungssystem besitzt, kann die Führungswelle auch außerhalb der Positionen der Endlagen der Führungswelle vorteilhaft zur Positionierung bzw. Winkeleinstellung eingesetzt werden.

Das Maß der Führungswelle ist dabei so bemessen, daß sie mindestens die Breite der Führung überragt. Eine solche Ausgestaltung ist insbesondere bei einem Winkelschnitt unter 90° günstig, bei welchem die beiden Führungen verhältnismäßig nah zueinander, hintereinander angeordnet sind und sich hierbei eine Führungswelle in der einen und die andere Führungswelle in der anderen Endlage befinden.

Ein weiterer Aspekt der erfindungsgemäßen Format- bzw. Plattensäge ist dadurch angegeben, daß zwei Führungen vorgesehen sind, die parallel zum Sägetisch beweglich und positionierbar ausgebildet sind und die Auflager tragen, an denen jeweils mindestens ein Gelenk angeordnet ist, in bzw. an dem Gelenk Führungswellen geführt sind, die den Anschlag an Anschlagsbefestigungen tragen. Diese Ausführungsform der erfindungsgemäßen Lösung zeichnet sich durch eine einfache Verstellbarkeit der jeweiligen Winkel des Anschlages aus und ist insbesondere auch von einer hohen Stabilität der Anschlagsführung gekennzeichnet. Es ist weiterhin leicht möglich, diese Ausführungsform der erfindungsgemäßen Lösung mittels motorischer Antriebe zu versehen, so daß eine Automatisierung der gesamten Einstellvorgänge erleichtert wird.

Eine vorteilhafte Weiterbildung der erfindungsgemäßen Format- bzw. Plattensäge zeichnet sich dadurch aus, daß, gegebenenfalls als Teil der Steuerung, eine Winkelsteuerung vorgesehen ist, in der ein Rechenprogramm hinterlegt ist, mittels dessen die Lage des Anschlages, der Auflagen, der Führungen in Abhängigkeit des Abstandes zwischen den beiden Führungen und dem gewählten Winkel unter Berücksichtigung der Stellungen der Führungswelle und unter Berücksichtigung der Stellung des vorderen Endes des Anschlages einstell- und bestimmbar ist. Die Winkelsteuerung ist dabei gegebenenfalls von der übrigen Steuerung getrennt oder in diese integriert ausgebildet. Sie überwacht letztendlich, daß ein gewünschter Winkel tatsächlich erreicht wird, wobei es hierbei zum einen die Möglichkeit gibt, daß die Winkelsteuerung auf die Positionierung der jeweils beweglichen Elemente (Führungen und Auflagen) einwirkt, indem die entsprechende Positionierung vorgegeben und deren Einstellung bzw. Erreichen überwacht wird. Bei einer einfacheren Ausgestaltung wird die Winkelsteuerung den jeweils erreichten Winkel anzeigen, der durch das händische Verschieben der jeweiligen, beweglichen Elemente entsteht und so das Einstellen des Winkels in jedem beliebigen Winkel zur Schnittlinie erheblich erleichtern.

Die Erfindung zeichnet sich auch dadurch aus, daß die fixen Endpunkte der Führungswellen durch Sensoren überwacht werden, wobei die Sensoren die Stellungsinformation der Führungswellen an die Steuerung weiterleiten. Da der Steuerung die Länge der Führungswelle als Maschinenkonstante hinterlegt ist, wird die jeweilige Verstelllänge, die letztendlich auf die jeweilige Lage des Anschlages Rückschluß bietet, durch den Sensor abgefragt und diese Stellungsinformation in die Steuerung beziehungsweise Winkelsteuerung eingespeist und dort entsprechend berücksichtigt.

Erfindungsgemäß wurde auch gefunden, daß es von Vorteil ist, wenn die Steuerung das vordere Ende des Anschlages, jeweils in Abhängigkeit des Winkels, so positioniert, daß dieses nicht die Schnittlinie des Sägeblattes schneidet, sondern direkt bzw. in einem definierten Abstand dazu an dieser anliegt. Dies muß so erfolgen, daß das Ende des Anschlages nicht den Flugkreis der Schneidzähne des Sägeblattes schneidet.

In einer bevorzugten Ausgestaltung der Erfindung ist vorgesehen, daß die Steuerung den Sägeblattantrieb erst dann freigibt, wenn durch die Positionsbestimmung und Verrechnung der Lage der Führung beziehungsweise der Auflagen sichergestellt ist, daß das vordere Ende des Anschlages nicht die Schnittlinie des Sägeblattes schneidet. Auch hier ist es möglich, dieses Konzept sowohl bei einer vollautomatischen wie auch einer teilautomatischen Säge einzusetzen. Bei einer vollautomatischen Säge wird diese erfindungsgemäße Verbesserung in der Maschinensteuerung einprogrammiert, bevor der Sägeblattantrieb aktiviert wird. Gleiches ist natürlich bei einer teilautomatischen Maschine ebenfalls möglich. Es wird so ein kollisionsfreies Schneiden beziehungsweise Sägen sichergestellt.

Dabei ist es weiter von Vorteil, wenn das vordere Ende so indexiert ist, daß der Abstand des Anschlages entlang der Schnittlinie kollisionsfrei zu dieser definiert ist. Die zuvor beschriebenen Positionierungsmöglichkeiten des Anschlages gewährleistet, daß zum einen der Anschlag nicht mit dem Sägeblatt bzw. Schnittwerkzeug in Berührung gerät und zum anderen, daß die Maßgenauigkeit durch die Definition des Abstandes zur Sägeschnittlinie insgesamt gewährleistet ist.

Die Indexierung wird zum Beispiel dadurch erreicht, daß in der Steuerung für einen gewissen Winkel ein Indexierungsmaß hinterlegt ist, bei welchem das vordere Ende des Anschlages die Schnittlinie nicht schneidet und die Steuerung aufgrund des Indexierungsmaßes und des gewählten Winkels die Position des Längenanschlages auf dem Anschlag an der gewünschten Seitenlänge des Werkstückes positioniert. Durch die Indexierung wird letztendlich der Anschlag an der Schnittlinie so kalibriert, daß der Längenanschlag immer das richtige Maß, nämlich das Schnittmaß längs des Anschlages bis zur Schnittline, hat.

Es ist vorgesehen, daß der Abstand des vorderen Endes des Anschlags zu der Anschlagbefestigung als Maschinenkonstante bezüglich der Indexierung in der Steuerung hinterlegt ist. In einer weiteren erfindungsgemäßen Variante ist vorgesehen, daß der Anschlag bezüglich einer Anschlagbefestigung beweglich ist, also eine bewegbare Achse besitzt. Dadurch verändert sich das Maß des Abstandes, was in der Steuerung in gleicher Weise aufgenommen und berücksichtigt wird, derart, daß sichergestellt wird, daß der Anschlag bzw. das vordere Ende des Anschlages nicht die Sägelinie schneidet und so zu einer Kollision mit dem Sägeblatt führen könnte.

Entsprechend einer vorteilhaften Weiterbildung der Erfindung ist es auch vorgesehen, daß auf bzw. an dem Anschlag ein verstellbar ausgebildeter Längenanschlag vorgesehen ist. Dieser Längenanschlag kann sowohl mechanisch als auch motorisch angetrieben verstellbar ausgebildet sein. Für bestimmte Zuschnittsarten ist es dabei von Vorteil, wenn der Längenanschlag abnehmbar ausgebildet ist. Hierbei ist es von Vorteil, daß der Längenanschlag ein Meß- und/oder Positioniersystem besitzt, welches, je nach Grad der Ausstattung der Säge, die jeweilige Maßeinstellung vollautomatisch oder teilweise unterstützt.

Die Erfindung wird nachfolgend anhand von Ausführungsbeispielen und Zeichnungen weiter beschrieben.

Es zeigen:
- Fig. 1: die erfindungsgemäße Format- bzw. Plattensäge mit einer Führung,
- Fig. 2 bis Fig. 5: die erfindungsgemäße Format- bzw. Plattensäge mit zwei Führungen in verschiedenen Einsatzarten und
- Fig. 6 bis Fig. 9: weitere Ausführungsformen der Erfindung.

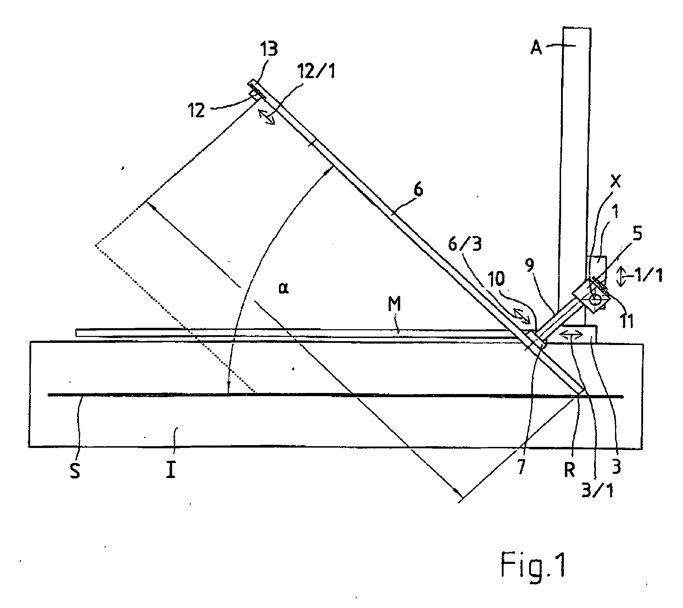

Die Fig. 1 zeigt eine erfindungsgemäße Format- bzw. Plattensäge mit Linksanschlag, wobei der Anschlag 6 auf einer Führung A angeordnet ist. Mit dem Bezugszeichen I ist der Sägetisch bezeichnet. Auf dem Sägetisch I ist die Schnittlinie S des Sägeblattes angeordnet. Das Sägeblatt selbst ist in dieser Darstellung nicht dargestellt. Der Anschlag 6 ist im Winkel α zur Schnittlinie S des Sägeblattes angeordnet. Der Anschlag 6 ist mittels der Führungswelle 9 über das Gelenk 5 auf dem Auflager 1 der Führung A beweglich angeordnet. Das Auflager 1 selbst ist selbstverständlich auf der Führung bewegbar. Dies ist mit dem Doppelpfeil 1/1 angezeigt.

Die Führung A ist entlang des Sägetisches I bzw. parallel zur Schnittlinie des Sägeblattes S geführt. Dies kann beispielsweise auf einer nicht dargestellten Führungsschiene erfolgen. Zur Positionierung der Führung A ist in dem Ausführungsbeispiel eine Meßstange M am Sägetisch angeordnet, welche die Position der Führung A anzeigt und/oder ermittelt. Der Anschlag 6 ist mit der Anschlagbefestigung 7 an der Führungswelle 9 befestigt.

Durch die Angabe des Doppelpfeiles 6/3 wird deutlich, daß diese Anschlagbefestigung so ausgeführt ist, daß der Anschlag in beide Richtungen bewegbar ist. Die Bezugszeichen 10 und 11 bezeichnen die Endlagen der Führungswelle 9. Die Führungswelle 9 ist zwischen den beiden Endlagen 10 und 11 verschiebbar.

Das Bezugszeichen 5 bezeichnet das Gelenk, welches vorteilhafterweise als Kreuzgelenk ausgeführt sein kann. Mit dem Doppelpfeil rechts neben dem Gelenk ist angedeutet, daß das Auflager 1 entlang der Führung A ebenfalls verschiebbar gelagert ist. Dies zeigt der dort angeordnete Doppelpfeil 1/1. Das Bezugszeichen 3 bezeichnet einen Wagen für die Führung A, welcher lediglich schematisch dargestellt ist. Auch hier wird mittels des Doppelpfeiles 3/1 angezeigt, daß die Führung parallel zur Schnittlinie S des Sägeblattes bewegbar angeordnet ist.

Der Winkel α bezeichnet den Winkel in dem der Anschlag 6 mit Bezug zur Schnittlinie S des Sägeblattes angeordnet ist. An dem Anschlag 6 ist mit dem Bezugszeichen 13 eine Meßskala angedeutet. Mit dem Bezugszeichen 12 ist der Längenanschlag zum Anschlag des zu bearbeitenden Werkstückes bezeichnet. Der Doppelpfeil 12/1 zeigt an, daß der Längenanschlag 12 auf dem Anschlag 6 beweglich angeordnet ist.

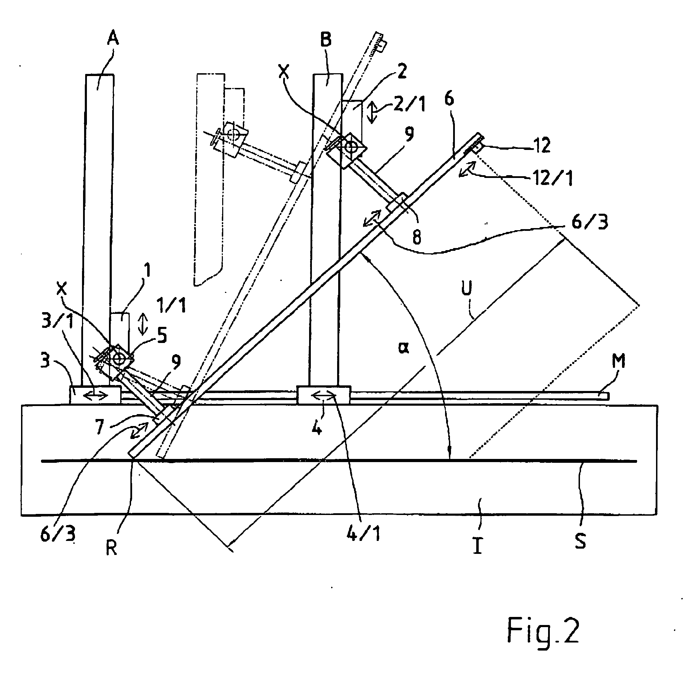

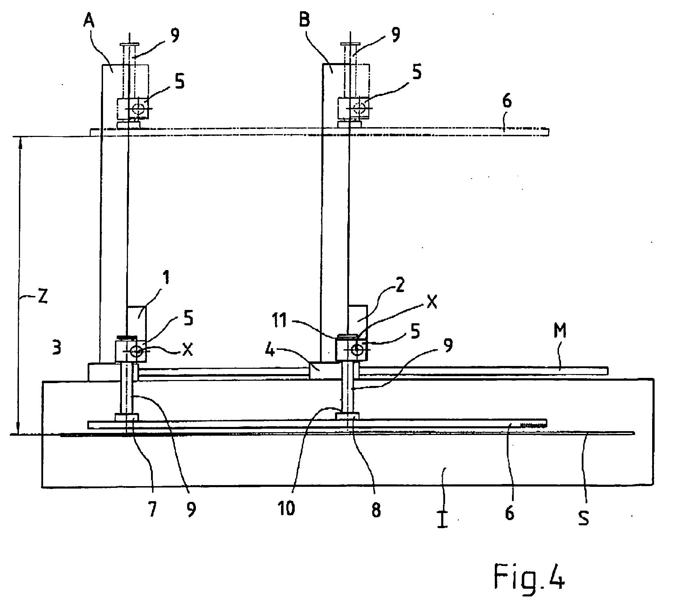

Fig. 2 zeigt eine Ausführungsform der erfindungsgemäßen Format- bzw. Plattensäge, bei der zwei Führungen A,B vorgesehen sind. Der Anschlag 6 ist dabei an zwei Führungswellen 9 gehalten, die wiederum über die Gelenke 5 auf bzw. an den Auflagern der Führungen A,B bewegbar angeordnet sind. Die Ausführungsform gemäß der Fig. 2 zeigt dabei eine Stellung des Anschlages als Rechtsanschlag. Wie aus der Fig. 2 ersichtlich, sind beide Führungen A,B entlang der Schnittlinie S des Sägeblattes bewegbar angeordnet. Die Bezugszeichen 3 und 4 bezeichnen dabei nur schematisch dargestellte Wagen der Führungen A,B. Die Bewegungsrichtung der Wagen 3 und 4 wird mit den Doppelpfeilen 3/1 und 4/1 angezeigt. Das Längenmaß des zu bearbeitenden Werkstückes ist durch das Bezugszeichen U angegeben. Der Anschlag 6 ist von Anschlagbefestigungen 7 und 8 beweglich an den Führungswellen 9 getragen. Die Gelenke 5 sind auf den Auflagern 1 und 2 der Führungen A und B wiederum beweglich angeordnet. Die Doppelpfeile 1/1 und 2/1 zeigen die Bewegungsrichtungen zur Verstellung der Auflager 1 und 2 an. Durch diese Art der erfindungsgemäßen Anordnung ist eine sehr einfache Verstellung der Winkellagen für das zu bearbeitende Werkstück möglich. Dies wird durch die gestrichelte Darstellung angedeutet. Die in Fig. 2 dargestellte Ausgestaltung ist auch ausreichend stabil, zum Beispiel wenn verhältnismäßig große Werkstücke zu bearbeiten sind. Die Anordnung des Anschlages 6 auf zwei Führungen A, B erlaubt auch gleichzeitig eine sehr hohe Winkelgenauigkeit über den gesamten winkelbereich, wobei gleichzeitig auch ein hochgenauer Parallelanschlag (vergl. Fig. 4) ohne Umrüstarbeiten möglich ist. Der Anschlag 6 ist in Richtung der Doppelpfeile 6/3 verstellbar.

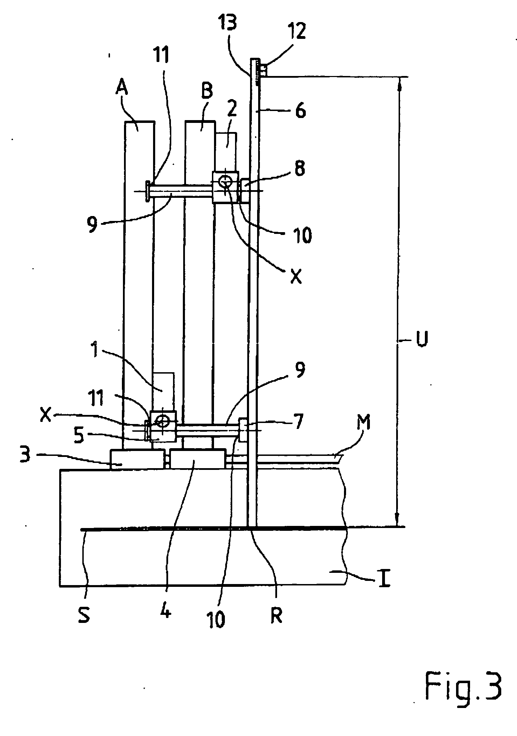

Die Fig. 3 zeigt eine erfindungsgemäße Format- und Plattensäge mit einem Anschlag für rechte Winkel (α = 90°) und als Längenanschlag. Auch in der Fig. 3 wurden die bereits vorgestellten Bezugszeichen verwendet. Es wird daher lediglich auf die Unterschiede zu den bisher bereits beschriebenen Figuren nochmals eingegangen. Der Anschlag 6 ist in dieser Ausführungsform im rechten Winkel zur Schnittlinie S des Sägeblattes angeordnet. Die Führungen A und B sind in dieser Ausführungsform derart beabstandet, daß die jeweilige Endstellung 10 bzw. 11 der Führungswellen 9 eingestellt ist. Mittels des Längenanschlages 12, welcher auf dem Anschlag 6 angeordnet ist, wird das Längenmaß des Werkstückes U eingestellt. Die Führungen A,B sind parallel zu der Schnittlinie S des Sägeblattes verschieblich angeordnet. Durch die Fixierung der beweglichen Teile bzw. Gelenke wird erreicht, daß die Verschieb- bzw. Verfahrbarkeit der Führungen A,B und damit des Anschlages 6 inklusive des darauf angeordneten zu bearbeitenden Werkstückes gewährleistet ist.

Die Fig. 4 zeigt eine erfindungsgemäße Format- bzw. Plattensäge, in welcher der Anschlag als Parallelanschlag eingestellt ist. In dieser Ausführungsform ist der Längenanschlag 12 von dem Anschlag 6 entfernt worden, um einen Einsatz als Parallelanschlag insgesamt zu gewährleisten. Durch die gestrichelte Darstellung ist das Verstellmaß Z angegeben, in welchem der Anschlag in Bezug zur Schnittlinie S des Sägeblattes veränderbar ist. Alle andere Bezugszeichen entsprechen dem bereits Vorgestellten.

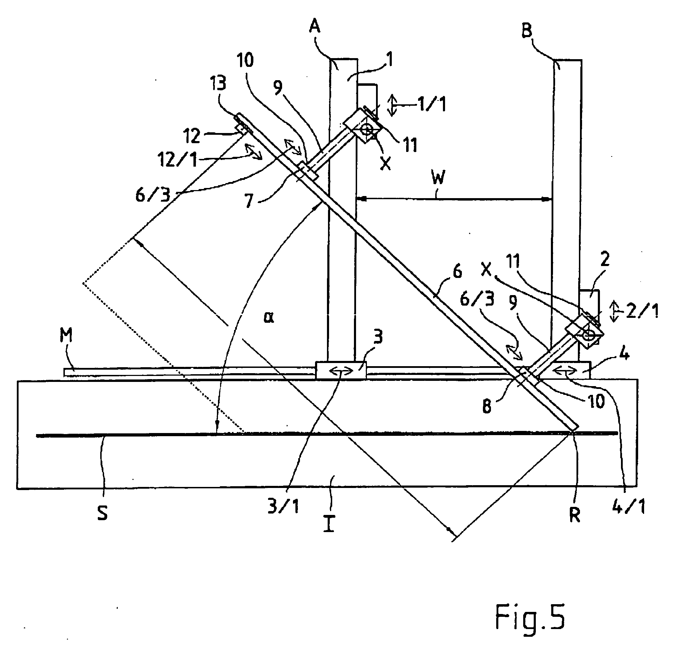

Die Fig. 5 zeigt eine erfindungsgemäße Format- bzw. Plattensäge mit einem als Winkelanschlag links eingestelltem Anschlag 6. Auch hier wurden die bereits beschriebenen Bezugszeichen wieder verwendet. Im Unterschied zur Fig. 2, wo der Anschlag als Winkelanschlag rechts vorgesehen ist, befindet sich das Auflager 1 auf der Führung A in einer weiter entfernten Stellung zur Schnittlinie S als in der Fig. 2. Das Auflager 2 auf der Führung B ist im Gegensatz zur Darstellung der Fig. 2 hier näher zur Schnittlinie S des Sägeblattes angeordnet, wodurch die veränderte Winkeleinstellung ermöglicht wird. Mit dem Bezugszeichen W ist der Abstand der Führungen A,B zueinander bezeichnet.

Die erfindungsgemäße Format- bzw. Plattensäge besitzt im Wesentlichen zwei Auflager 1 und 2 mit den Führungen A und B. Die Führungen A und B können beispielsweise in einem Rechner oder Steuerung elektronisch digital ausgewertet werden und von der Steuerung als Achsen erkannt werden. Zudem wird in der Steuerung auch der Abstand W der Führungen A und B zueinander erfasst. An jeder der beiden Führungen A und B ist ein Gelenk 5, vorteilhafterweise ein Kreuzgelenk angebracht. Dieses lagert axial beweglich in waagerechter Richtung je eine Führungswelle 9. Die Führungswelle 9 hat bei den Bezugszeichen 10 und 11 jeweils ihre fixen Endlagen. Diese Endstellungen können beispielsweise mit einem Sensor erfasst und als Information an eine Steuerung der Format- bzw. Plattensäge gegeben werden. Die Führungswellen 9 tragen den Anschlag 6, an welchem das Werkstück angelegt wird. Das Werkstück wurde in den Figuren aus Gründen der Übersichtlichkeit nicht dargestellt. Die Befestigung der Führungswelle 9 und des Anschlages 6 ist dabei so gestaltet, daß beide Teile zueinander seitlich leicht verschiebbar sind.

Zum Parallelschneiden stehen die beien Führungen A und B aus Stabilitätsgründen in einem möglichst großen Abstand zueinander. Dies ist zum Beispiel in Fig. 4 gezeigt. Die beiden Führungswellen 9 stehen zurückgezogen in ihren jeweiligen Endlagen 10 bzw. 11 (strichpunktierte Stellung). Die beiden Führungen A und B werden beispielsweise über die elektronische Steuerung und durch die gewünschte Maßeingabe für das Werkstück genau gleich positioniert. Für kleinere Maße werden die Führungswellen 9 beispielsweise in die Stellung der Endlage 11 jeweils eingestellt. Dadurch kann der Anschlag auch über dem Maschinentisch positioniert werden, so daß Maße bis nahe 0 erreicht werden können. Das Differenzmaß zwischen den Stellungen der Endlagen 10 und 11 ist als Maschinenkonstante in der Steuerung hinterlegt.

Zum Winkelschneiden (dies ist zum Beispiel in Fig. 5 gezeigt) wird die Führung A und die Führung B in Abhängigkeit des Abstandes der beiden Führungen und des gewünschten Winkels auf eine errechnete Position gebracht. Diese errechnete Position kann beispielsweise durch Winkelsteuerung bzw. durch die Steuerung erfolgen. Aus Stabilitätsgründen sollte der Abstand der Führungen A,B zueinander möglichst groß sein. Auch die Stellungen der beiden Führungswellen in den Endlagen 10 und 11 werden vom Rechner bzw. der Steuerung berücksichtigt. Die Grundeinstellung kann dabei beispielsweise die Stellung der Endlage 11 sein. Die Ermittlung der erforderlichen Positionen erfolgt in der als Rechner ausgelegten Steuerung mit Hilfe eines entsprechenden Programmes unter Anwendung der trigonometrischen Funktionen. Es soll weiterhin erreicht werden, daß auch die Seitenlänge einer spitzwinkligen Platte bestimmt werden kann. Dazu wird der Anschlag 6 mit einer mechanischen oder einer elektronischen Meßskala 13 ausgestattet.

Die Verbindung des Anschlages 6 der Führungswelle, welche der Schnittlinie des Sägeblattes S am nächsten kommt, wird an einer bestimmten Position indexiert. Diese Position (bzw. dieser Abstand) ist im Rechner als Maschinenkonstante hinterlegt und wird von ihm deshalb erkannt. Das Rechenprogramm bestimmt die Lage der beiden Führungen A und B in Abhängigkeit des Abstandes zwischen den beiden Führungen A und B und dem gewählten Winkel bei Berücksichtigungen der Stellungen 10 und 11 der Endlagen der Führungswellen 9. Dies erfolgt so, daß das vordere Ende des Anschlages R nicht kollidierend an der Schnittlinie des Sägeblattes S liegt. Mit Hilfe der Skala 13 und dem Längenanschlag 12, ist die Seitenlänge U beispielsweise einstellbar geworden. Die Indexierung ist dabei so gewählt und in der Steuerung hinterlegt, daß sie sowohl beim Winkelanschlag links (Fig. 5) wie auch beim Winkelanschlag rechts (Fig. 2), einsetzbar ist.

In Fig. 3 ist eine Anordnung der Erfindung gezeigt, wo der Anschlag 6 rechtwinklig zur Schnittlinie S orientiert ist. Für einen gewünschten Winkel von 90° (und nahe 90°, gegebenenfalls auch größer als 90°) wird die Führungswelle 9, welche von der Schnittlinie S des Sägeblattes weiter entfernt ist, zurück in die Stellung der Endlage 10 geschoben. Der Abstand der beiden Führungen A und B zueinander wurden so gewählt, daß nach Eingabe des gewünschten Winkels von exakt 90° dieser an dem Anschlag 6 im Verhältnis zur Schnittlinie des Sägeblattes S entsteht. Die anschlagnahe Führung B ist aus Stabilitätsgründen möglichst weit hinten positioniert. Die Führung A bringt den Anschlag genau an die Schnittlinie des Sägeblattes S, so daß das Maß für das Werkstück mit Hilfe der Skala 13 an dem Anschlag ermittelt werden kann. Bei Winkeln zur anderen Seite hin wird analog gegensätzlich verfahren.

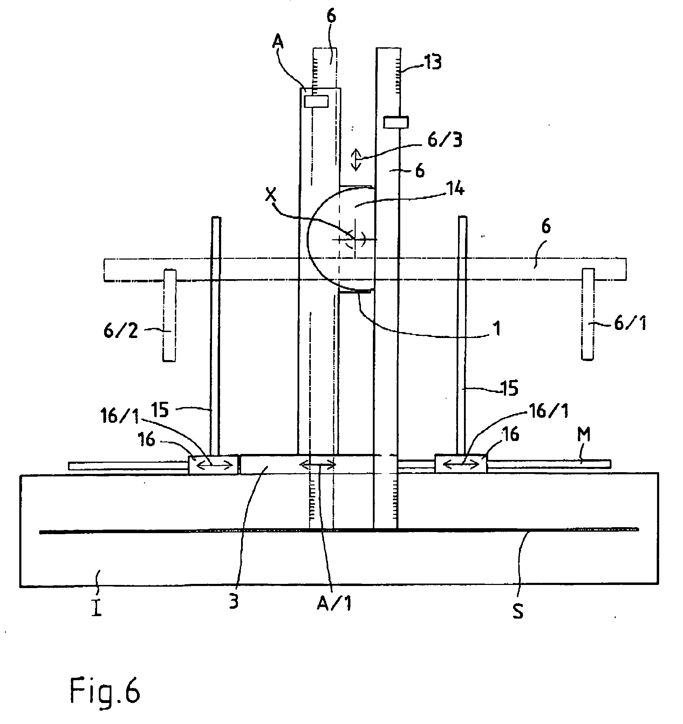

Die Fig. 6 zeigt eine weitere Ausführungsform der erfindungsgemäßen Format- beziehungsweise Plattensäge. Hier ist im Unterschied zu den zuvor beschriebenen Ausführungsformen nur eine Führung A vorgesehen. Die Führung A ist entlang des Sägetisches I bzw. der dort angeordneten Meßstange beweglich geführt. Vorzugsweise ist dazu ein nicht näher bezeichneter Wagen vorgesehen. Mit einem Doppelpfeil A/1 ist dies lediglich schematisch dargestellt. Dabei ist der Sägetisch wie in den anderen Figuren mit dem Bezugszeichen I bezeichnet. Das Bezugszeichen S bezeichnet die Schnittlinie.

Der Anschlag 6 ist in dieser Ausführungsform der Erfindung an beziehungsweise auf einem Drehteller 14 gelagert, welcher beispielsweise auf dem Auflager 1 drehbar befestigt ist. In der gezeigten Darstellung befindet sich der Anschlag 6 genau im rechten Winkel zur Schnittlinie S. Die gestrichelten Darstellungen des Anschlags 6 zeigen in einer weiteren Ausführungsform den Anschlag genau parallel zur Schnittlinie S, wobei für diese Ausführungsform Distanzstücke 6/1 und 6/2 vorgesehen sind, welche am Anschlaglineal angebracht sind. Diese Distanzstücke sind dafür bestimmt, um die Maße innerhalb des Sägetisches I bis Null erreichen zu können. Bei Paralleleinstellung des Anschlags 6 zur Sägelinie S können mit Hilfe eines Meßsystemes in der Längsführung exakte Sägeschnitte auf Breite ausgeführt werden. In der Führung A ist eine Längsführung für das Auflager 1 beziehungsweise den Drehteller 14 vorgesehen.

In Fig. 6 ist gezeigt, daß das Auflager 1 beziehungsweise der Drehteller 14 rechtwinklig zur Sägelinie S auf der Führung A verschiebbar ist. Die Führung A ist dabei strichpunktiert angedeutet. Gemäß dieser Ausführungsform der Erfindung lassen sich mit Hilfe des Anschlages 6 alle Winkel im Bezug zur Sägelinie S zwischen 0° und 180° einstellen. Um die Stabilität des Anschlages 6 insbesondere bei größeren zu bearbeitenden Werkstücken zu erhöhen, sind Auflagen 15 vorgesehen, die gemäß der Ausführungsform der Fig. 6 als Wagen ausgebildet sind. Mittels dieser Auflagen 15 ist es gewährleistet, daß auch größere Werkstücke eine ausreichende Auflage besitzen, wenn sie entlang der Schnittlinie S geführt werden. Die Wagen 15 sind dabei entlang des Sägetisches I bzw. entlang der dort angeordneten Meßstange M vorzugsweise auf Wagen 16 beweglich angeordnet. Die Verfahrbarkeit ist mit Doppelpfeilen in dem Wagen 16 schematisch angeordnet. Die Doppelpfeile A/1, 6/3 und 16/1 zeigen wieder Bewegungsrichtungen der jeweiligen bereits beschriebenen Merkmale auf.

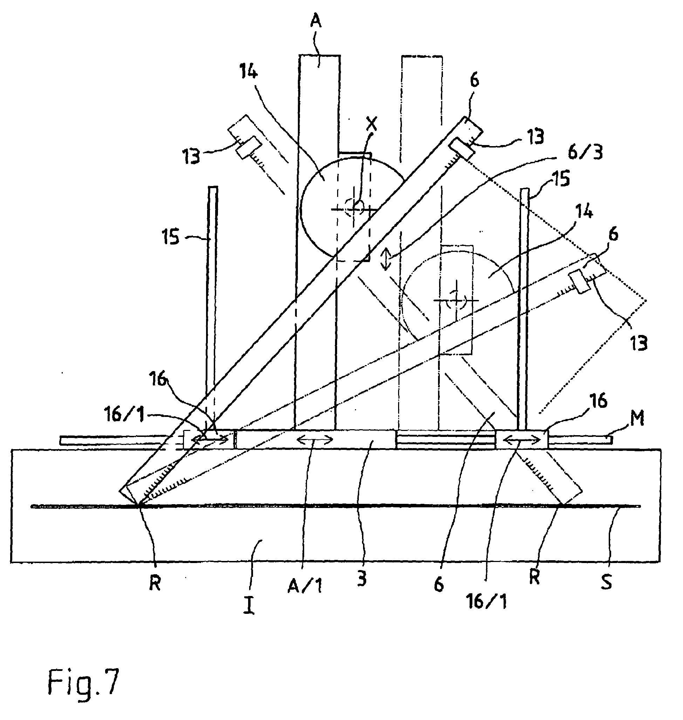

Die Fig. 7 zeigt die Ausführungsform der Erfindung gemäß der Fig. 6 in einer Darstellung, bei der der Anschlag 6 in unterschiedlichen Winkeln in Bezug zur Schnittlinie S dargestellt ist. Bisher bereits vorgestellte Bezugszeichen werden analog verwendet, so daß auf eine erneute vollständige Vorstellung verzichtet wird. Durch die unterschiedlichen Einstellmöglichkeiten des Anschlages 6 auf der Führung A und dessen drehbare Lagerung auf dem Auflager 1 an dem Drehteller 14, ist jede Winkeleinstellung in Bezug zur Schnittlinie S möglich. Der Referenzpunkt R wird dabei, wie bereits bei den anderen Fig. beschrieben, so gewählt, daß dieser immer genau auf beziehungsweise an der Schnittlinie S liegt. An dem Anschlag 6 sind wieder Meßskalen 13 vorgesehen, die der genauen Einstellung der Werkstückmaße dienen. Mittels dieser Meßskalen 13 ist es möglich, mit einem Winkelschnitt auch die gewünschte Seitenlänge zu erhalten. Dies gilt sowohl für die rechte als auch für die linke Seite. In den gestrichelten Darstellungen gemäß der Fig. 7 sind dabei unterschiedliche Winkel in Bezug zur Schnittlinie S dargestellt. Wie aus der Fig. 7 ersichtlich, sind Schrägschnitte sowohl links- als auch rechtsseitig durch die erfindungsgemäße Ausführung der Format- beziehungsweise Plattensäge auch in dieser Ausführungsform der Erfindung ermöglicht. Wie aus der Fig. 7 ebenfalls ersichtlich, unterstützen die Auflager 15 in den jeweiligen Winkelstellungen das Auflegen der Werkstücke. Die Auflager 15 sind dabei auf dem Wagen 16 vorteilhafterweise gelagert, so daß sie ebenfalls entlang einer Meßstange M beziehungsweise entlang des Sägetisches I verfahrbar sind. Somit lassen sich auch die Anschläge 15 in die jeweils gewünschte unterstützende Stellung bringen. Dies kann entweder handgetrieben beziehungsweise motorangetrieben erfolgen. Die Doppelpfeile A/1, 6/3 und 16/1 geben wieder die Bewegungsrichtungen der einzelnen Merkmale an.

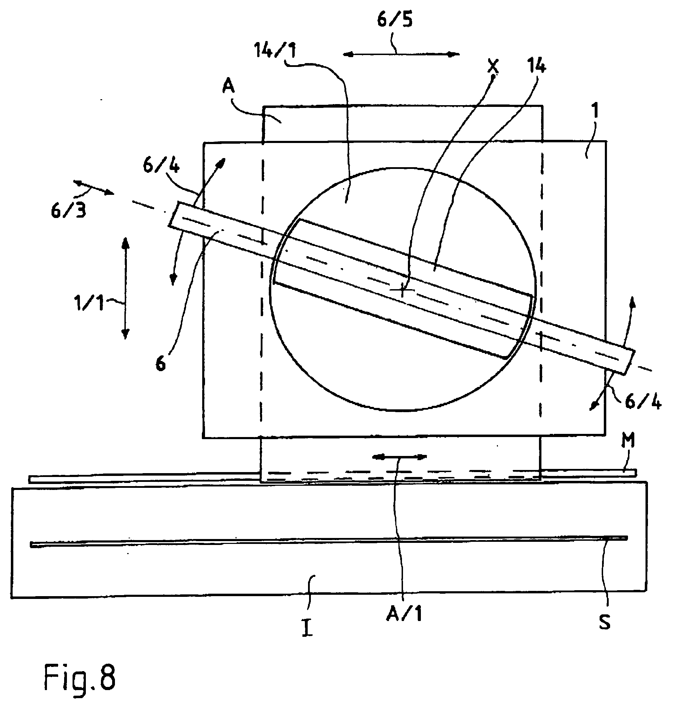

Die Fig. 8 zeigt eine weitere Ausführungsform der erfindungsgemäßen Format- und Plattensäge. In dieser Ausführungsform ist die Führung A als Tisch größer dimensioniert als in den vorher beschriebenen Ausführungsformen ausgeführt. Auf dieser Führung A befindet sich das Auflager 1, welches eine kreisrunde Ausnehmung als Aufnahme für einen Drehteller 14 trägt. Der Anschlag 6 ist auf dem Drehteller 14, welcher beispielsweise auch nur als Drehtellersegment wie dargestellt ausgeführt sein kann, angeordnet. Er ist dabei sowohl mit dem Drehteller 14 drehbar als auch längsverschieblich (siehe Doppelpfeile 6/3 und 6/4) auf diesem gelagert. Gleiches gilt für das Auflager selbst, welches zumindest entlang des Sägetisches I und im rechten Winkel bezogen auf die Schnittlinie S bewegbar beziehungsweise verschiebbar ist. Dies zeigt der Doppelpfeil 1/1. Das Auflager 1 ist seinerseits auf der Führung A verschiebbar, welches durch den Doppelpfeil 6/5 angezeigt wird. Auch mit einer derartigen Ausführungsform lassen sich Winkeleinstellungen von + 90° bis - 90° einstellen. Die Führung A ist dabei ebenfalls entlang der Meßstange M beziehungsweise entlang des Sägetisches I verschiebbar. Dies zeigt der Doppelpfeil A/1.

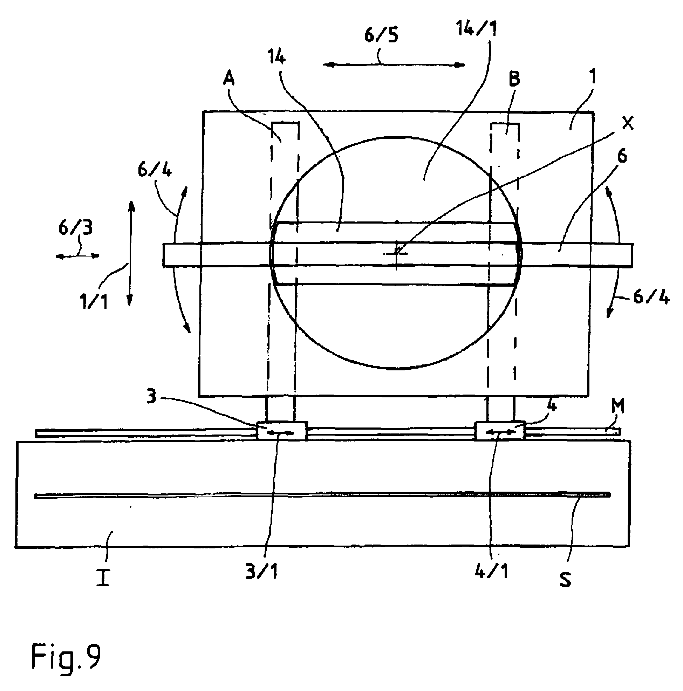

Bei der Ausführungsform gemäß der Fig. 9 ist im Gegensatz zur Darstellung der Fig. 8 die Führung A wieder als zweiteilige Führung ausgebildet. In gestrichelter Ausführung ersichtlich sind dabei die Führungen A und B. Gemäß einer entsprechenden Weiterbildung der Erfindung sind diese Führungen A und B ebenfalls als Wagen ausgebildet, was mit den Bezugszeichen 3 und 4 angedeutet wird. Die Bewegungsrichtung der Wagen 3, 4 wird mit den Doppelpfeilen 3/1, 4/1 gezeigt. Das Auflager 1 ist als Tisch ausgebildet, in dessen Zentrum sich eine kreisrunde Öffnung zur Aufnahme des Drehtellers beziehungsweise des Drehtellersegmentes 14 befindet. Die Führung 6 ist sowohl mit dem Drehtellersegment 14 auf dem Drehtellersegment längsbeweglich verschiebbar (siehe Doppelpfeile 6/3). Sie ist ebenfalls mit dem Drehteller um 360° drehbar (siehe Doppelpfeil 6/4). Der Doppelpfeil 6/5 zeigt an, daß das Auflager 1 auf den Führungen A und B verschiebbar angeordnet ist. Mit dieser Ausführungsform lassen sich dadurch auch alle gewünschten Winkeleinstellungen, wie zuvor beschrieben, erreichen.

Des Weiteren sieht die Erfindung vor, daß die elektronische Steuerung für die Positionierung der Führungen A, B, der Auflager 1, 2 und/oder des Anschlages 6 dient. Außerdem erfasst die Steuerung die Position der Führungen A, B, den Abstand W zwischen den Führungen A, B, die Stellung der Auflager 1,2 und/oder des Anschlages 6 und wertet diese entsprechend aus. Je nach Grad der Bedienungsfreundlichkeit ist vorgesehen, daß die Steuerung nur eine, einige wenige oder alle der vorgenannten Funktionalitäten besitzt.

## Patentansprüche

1. Format- bzw. Plattensäge mit einem Sägetisch, einem im Sägetisch gelagerten Sägeblatt mit einer durch das Sägeblatt definierten Schnittlinie (S) und einem auf wenigstens einer Führung (A) gelagerten Anschlag (6), der auf der Führung (A) um einen Drehpunkt (X) drehbar, längsbeweglich verschiebbar und fixierbar angeordnet ist, wobei ein Auflager (1) an der Führung (A) vorgesehen ist und das Auflager (1) auf der Führung (A) bewegbar ist, **dadurch gekennzeichnet, daß** die Führung (A) an wenigstens einem Wagen (3, 4) vorgesehen ist, der parallel zur Schnittlinie (S) des Sägeblattes bewegbar angeordnet ist.

2. Format- bzw. Plattensäge nach Anspruch 1, **dadurch gekennzeichnet, daß** der Anschlag (6) sowohl parallel zu der Schnittlinie (S) sowie auch in einem Winkel hierzu ausrichtbar ist.

3. Format- bzw. Plattensäge nach einem der vorhergehenden Ansprüche, **dadurch gekennzeichnet, daß** der Drehpunkt (X) auf der Führung (A), die insbesondere rechtwinklig zur Schnittlinie (S) orientiert ist, längsbeweglich angeordnet ist oder der Drehpunkt (X) fest auf der Führung (A) angeordnet ist und der Anschlag (6) bezüglich des Drehpunktes (X) verschiebbar ist.

4. Format- bzw. Plattensäge nach einem der vorhergehenden Ansprüche, **dadurch gekennzeichnet, daß** der Anschlag (6) um mehr als 180° drehbar um den Drehpunkt (X) angeordnet ist oder der Anschlag im Drehpunkt längsverschieblich festlegbar ist und im übrigen keine weitere Führung aufweist.

5. Format- bzw. Plattensäge nach einem der vorhergehenden Ansprüche, **dadurch gekennzeichnet, daß** ein Meßsystem vorgesehen ist, welches zumindest die Winkellage (2) des Anschlages, den Abstand des Drehpunktes zu einem Referenzpunkt der Sägelinie oder die relative Position des Anschlages ermittelt und gegebenenfalls auswertet.

6. Format- beziehungsweise Plattensäge nach einem der vorhergehenden Ansprüche, **dadurch gekennzeichnet, daß** zwischen dem Anschlag (6) und der Führung (A) bzw. dem Auflager (1) eine Führungswelle (9) angeordnet ist.

7. Format- beziehungsweise Plattensäge nach einem der vorhergehenden Ansprüche, **dadurch gekennzeichnet, daß** die Führung (A) bzw. das Auflager (1) durch ein Gelenk (5) mit der Führungswelle (9) verbunden ist.

8. Format- beziehungsweise Plattensäge nach einem der vorhergehenden Ansprüche, **dadurch gekennzeichnet, daß** der Anschlag (6) an der Führungswelle (9) verschiebbar angeordnet ist und/oder die Führungswelle (9) in dem Gelenk (5) verschiebbar gelagert ist.

9. Format- beziehungsweise Plattensäge nach einem der vorhergehenden Ansprüche, **dadurch gekennzeichnet, daß** an beziehungsweise auf dem Auflager (1) ein Drehteller (14) angeordnet ist, der um eine Tellerachse insbesondere um 360° drehbar ist und der den Anschlag (6) trägt.

10. Format- beziehungsweise Plattensäge nach einem der vorhergehenden Ansprüche, **dadurch gekennzeichnet, daß** das Auflager (1) als Tisch ausgebildet ist, der eine kreisförmige Führungsöffnung (14/1) aufweist, die vorzugsweise im Zentrum des Auflagers (1) angeordnet ist, wobei die Führungsöffnung (14/1) einen Drehteller (14) beziehungsweise ein Drehtellersegment aufnimmt, derart, daß der Drehteller (14) um bis zu 360° in der Führungsöffnung (14/1) drehbar gelagert ist, und der Anschlag (6) auf dem oder an dem Drehteller (14) beziehungsweise dem Drehtellersegment verschiebbar gelagert ist.

11. Format- beziehungsweise Plattensäge nach einem der vorhergehenden Ansprüche, **dadurch gekennzeichnet, daß** an dem Anschlag (6) mindestens ein Distanzstück (6/1, 6/2) vorgesehen ist, welches in Richtung zum Sägetisch (I) beziehungsweise zur Schnittlinie (S) weist.

12. Format- beziehungsweise Plattensäge nach einem der vorhergehenden Ansprüche, **dadurch gekennzeichnet, daß** mindestens eine Auflage (15) vorgesehen ist, auf der der Anschlag (6) und/oder das zu bearbeitende Werkstück aufliegt.

13. Format- beziehungsweise Plattensäge nach einem der vorhergehenden Ansprüche, **dadurch gekennzeichnet, daß** der Anschlag (6) von zwei Führungen (A, B) geführt ist, deren Abstand zueinander veränderbar ist.

14. Format- beziehungsweise Plattensäge nach Anspruch 11, **dadurch gekennzeichnet, daß** jede der Führungen (A, B) je über ein Auflager (1, 2) den Anschlag (6) trägt und die Führung bzw. die Führungen (A, B) parallel zur Schnittlinie (S) beweglich und positionierbar sind.

15. Format- beziehungsweise Plattensäge nach einem der vorhergehenden Ansprüche, **dadurch gekennzeichnet, daß** eine Meßstange (M), gegebenenfalls als Teil des Meßsystems, vorgesehen ist, die zur Ermittlung der Position der Führungen (A, B) bzw. deren Abstand zueinander dient oder der Abstand (W) der Führungen (A, B) zueinander mittels einer Feststellvorrichtung fixierbar ist.

16. Format- beziehungsweise Plattensäge nach einem der vorhergehenden Ansprüche, **dadurch gekennzeichnet, daß** die Führung (A, B), das Auflager (1, 2), die Rotation des Anschlages um den Drehpunkt beziehungsweise der Anschlag jeweils motorisch angetrieben und insbesondere durch eine Steuerung positionierbar sind und insbesondere der jeweilige motorische Antrieb derart arretierbar ist, daß der Antrieb als Fixiervorrichtung wirkt.

17. Format- beziehungsweise Plattensäge nach Anspruch 16, **dadurch gekennzeichet, daß** die Steuerung eine Anzeige umfaßt, auf welcher die winkellage (2) des Anschlages und/oder die relative Lage des Anschlages zur Sägelinie angezeigt wird.

18. Format- beziehungsweise Plattensäge nach einem der vorhergehenden Ansprüche 16 und 17, **dadurch gekennzeichnet, daß** die Steuerung aufgrund der gemessenen Werte des Meßsystems derart auf die jeweiligen motorischen Antriebe wirkt, um unter Beibehaltung von gewünschten eingestellten oder in die Steuerung eingegebenen Werten für den Winkel (2) und/oder des Abstandes des Anschlages von der Sägelinie, daß der Anschlag nicht die Schnittlinie schneidet.

19. Format- beziehungsweise Plattensäge nach einem der Ansprüche 16 bis 18, **dadurch gekennzeichnet, daß** eine elektronische Steuerung vorzugsweise in der Steuerung des Meßsystems bzw. in der Maschinensteuerung für die Positionierung der Führungen (A, B), der Auflager (1, 2), des Anschlages (6) vorgesehen ist und die Steuerung die Position der Führungen (A, B), den Abstand (W) zwischen den Führungen (A, B) sowie die Stellung der Auflager (1, 2) beziehungsweise des Anschlages (6) erfaßt und auswertet.

20. Format- beziehungsweise Plattensäge nach einem der Ansprüche 6, 7 und 8, **dadurch gekennzeichnet, daß** die Verstellänge der Führungswellen (9) zwischen ihren Endlagen (10, 11) als Maschinenkonstante in der Steuerung hinterlegt ist beziehungsweise die Führungswelle (9) nur in den jeweiligen Endlagen (10, 11) für die Winkeleinstellung eingesetzt wird.

21. Format- beziehungsweise Plattensäge nach Anspruch 20, **dadurch gekennzeichnet, daß** die Fühx-ungswelle (9) ein eigenes Meß- und/oder Positioniersystem besitzt.

22. Format- beziehungsweise Plattensäge nach einem der vorhergehenden Ansprüche 20 und 21, **dadurch gekennzeichnet, daß** das Maß der Führungswelle (9) so bemessen ist, daß sie mindestens die Breite der Führung (A, B) überragt.

23. Format- beziehungsweise Plattensäge nach einem der vorhergehenden Ansprüche, **dadurch gekennzeichnet, daß** gegebenenfalls als Teil der Steuerung eine Winkelsteuerung vorgesehen ist, mittels derer die Lage des Anschlags (6), der Auflagen (1, 2), der Führungen (A, B) in Abhängigkeit des Abstandes zwischen den beiden Führungen und dem gewählten Winkel unter Berücksichtigung der Stellungen der Führungswellen (9) und unter Berücksichtigung der Stellung des vorderen Endes des Anschlages (6) bzw. des Referenzpunktes (R) bestimmbar ist.

24. Format- beziehungsweise Plattensäge nach einem der vorhergehenden Ansprüche, **dadurch gekennzeichnet, daß** die Steuerung den Sägeblattantrieb erst freigibt, wenn durch die Positionsbestimmung und Verrechnung der Lage der Führung (A, B) bzw. der Auflagen sicher gestellt ist, daß das vordere Ende des Anschlages (6) bzw. der Referenzpunkt (R) nicht die Schnittlinie (S) des Sägeblattes schneidet.

25. Format- beziehungsweise Plattensäge nach einem der vorhergehenden Ansprüche, **dadurch gekennzeichnet, daß** der Abstand der Anschlagbefestigung (7,8) zum vorderen Ende (2) des Anschlags (6) indexiert als Maschinenkonstante in der Steuerung hinterlegt ist.

26. Format- beziehungsweise Plattensäge nach einem der vorhergehenden Ansprüche, **dadurch gekennzeichnet, daß** ein Meß- und Positioniersystem des Längenanschlages (12) oder Längenanschlag (12) motorisch angetrieben verstellbar ist.

## Claims

1. Final trimming saw or saw for slabs with a saw table, a saw blade supported in the saw table with a cutting line (S) defined by the saw blade, and a stopper (6) supported on at least one guide (A) which is arranged on the guide (A) in such a way that it can be turned around a center of motion (X), can be shifted in a longitudinal motion, and can be fixed, a bearing (1) being provided at the guide (A), and the bearing (1) being movable on the guide (A), **characterised in that** the guide (A) is provided on at least one carriage (3, 4) which is arranged movably parallel to the cutting line (S) of the saw blade.

2. Final trimming saw or saw for slabs according to claim 1, **characterised in that** the stopper (6) can be orientated parallel to the cutting line (S) as well as angled to it.

3. Final trimming saw or saw for slabs according to one of the preceding claims **characterised in that** the center of motion (X) is arranged movably in longitudinal direction on the guide (A) which is orientated in particular rectangularly to the cutting line (S), or the center of motion (X) is arranged fixedly on the guide (A), and the stopper (6) can be shifted with regard to the center of motion (X).

4. Final trimming saw or saw for slabs according to one of the preceding claims, **characterised in that** the stopper (6) is arranged in such a way that it can be turned more than 180° around the center of motion, or the stopper can be fixed in the center of motion in such a way that it can be shifted longitudinally and otherwise has no guide.

5. Final trimming saw or saw for slabs according to one of the preceding claims **characterised in that** a measuring unit is provided which determines at least the angle position (2) of the stopper, the distance of the center of motion to a reference position of the saw line, or the relative position of the stopper, and, if necessary, evaluates it.

6. Final trimming saw or saw for slabs according to one of the preceding claims **characterised in that** between the stopper (6) and the guide (A) or the bearing (1) a guide shaft (9) is arranged.

7. Final trimming saw or saw for slabs according to one of the preceding claims, **characterised in that** the guide (A) or the bearing (1) is connected by a joint (5) with the guide shaft (9).

8. Final trimming saw or saw for slabs according to one of the preceding claims, **characterised in that** the stopper (6) is arranged at the guide shaft (9) in such a way that it can be shifted, and/or the guide shaft (9) is arranged in the joint (5) in such a way that it can be shifted.

9. Final trimming saw or saw for slabs according to one of the preceding claims, **characterised in that** at or on the bearing (1) a rotary table (14) is arranged which can be rotated around a table axis in particular around 360°, and which carries the stopper (6).

10. Final trimming saw or saw for slabs according to one of the preceding claims, **characterised in that** the bearing (1) is designed as table which has a circular guide opening (14/1) which is arranged preferably in the center of the bearing (1), the guide opening (14/1) receiving a rotary table (14) or a rotary table segment in such a way that the rotary table (14) is supported in the guide opening (14/1) rotatably up to 360°, and the stopper (6) is supported in such a way on or at the rotary table (14) or the rotary table segment that it can be shifted.

11. Final trimming saw or saw for slabs according to one of the preceding claims, **characterised in that** at the stopper (6) at least one spacer block (6/1, 6/2) is provided which points in the direction to the saw table (I) or the cutting line (S).

12. Final trimming saw or saw for slabs according to one of the preceding claims, **characterised in that** at least one support (15) is provided on which the stopper (6) and/or the work piece which has to be worked on is supported.

13. Final trimming saw or saw for slabs according to one of the preceding claims, **characterised in that** the stopper (6) is guided by two guides (A, B) and the distance to one another can vary.

14. Final trimming saw or saw for slabs according to claim 11, **characterised in that** each of the guides (A, B) carries via a bearing (1, 2) the stopper (6), and the guide or the guides (A, B) can move and be positioned parallel to the cutting line (S).

15. Final trimming saw or saw for slabs according to one of the preceding claims, **characterised in that** a measuring rod (M) is provided, if necessary, as part of the measuring unit which serves for defining the position of the guides (A, B) or their distance to one another, or the distance (W) of the guides (A, B) to one another can be fixed by means of an adjustment device.

16. Final trimming saw or saw for slabs according to one of the preceding claims, **characterised in that** the guides (A, B), the bearing (1, 2), the rotation of the stopper around the center of motion or the stopper each are either driven by a motor and, in particular, can be positioned by a control, and in particular the respective motor drive can be arrested in such a way that the drive serves as fixing device.

17. Final trimming saw or saw for slabs according to claim 16, **characterised in that** the control comprises a display on which the angle position (2) of the stopper and/or the relative position of the stopper to the saw line are indicated.

18. Final trimming saw or saw for slabs according to one of the preceding claims 16 and 17, **characterised in that** the control acts, because of the measured values of the measuring unit, on the respective motor drive in such a way that, so that, while desired values for the angle (2) either set or entered in the control and/or the distance of the stopper from the saw line are kept, the stopper does not cut the cutting line.

19. Final trimming saw or saw for slabs according to one of the claims 16 to 18, **characterised in that** an electric control is provided preferably in the control of the measuring unit or the machine control for positioning the guides (A, B), the bearings (1, 2), the stopper (6), and the control collects and evaluates the position of the guides (A, B), the distance (W) between the guides (A, B) as well as the position of the bearings (1, 2) or the stopper (6).

20. Final trimming saw or saw for slabs according to one of the claims 6, 7 and 8, **characterised in that** the adjustment length of the guide shafts (9) between their final positions (10, 11) is deposited as machine constant in the control, or the guide shaft (9) is used only in the respective final positions (10, 11) for angle adjustment.

21. Final trimming saw or slab saw according to claim 20, **characterised in that** the guide shaft (9) has its own measuring and/or positioning unit.

22. Final trimming saw or saw for slabs according to one of the preceding claims 20 and 21, **characterised in that** the guide shaft (9) is dimensioned in such a way that it exceeds at least the width of the guide (A, B).

23. Final trimming saw or saw for slabs according to one of the preceding claims, **characterised in that**, if necessary, an angle control is provided as part of the control by means of which the position of the stopper (6), the bearings (1, 2), the guides (A, B) can be determined in dependency on the distance between the two guides and the chosen angle with regard to the positions of the guide shafts (9) and with regard to the position of the front end of the stopper (6) or the reference position (R).

24. Final trimming saw or saw for slabs according to one of the preceding claims, **characterised in that** the control releases the drive of the of the saw blade only when by defining the position and processing the position of the guide (A, B) or the bearings it is guaranteed that the front end of the stopper (6) or the reference position (R) does not cut the cutting line (S) of the saw blade.

25. Final trimming saw or saw for slabs according to one of the preceding claims, **characterised in that** the distance of the stopper fastening (7, 8) indexed to the front end (2) of the stopper (6) is deposited indexedly as machine constant in the control.

26. Final trimming saw or saw for slabs according to one of the preceding claims, **characterised in that** a measuring and positioning unit of the longitudinal stopper (12) or longitudinal stopper (12) can be adjusted driven by a motor.

## Revendications

1. Scie de découpe comportant un plan de découpe, une lame de scie guidée au niveau de la table et définissant une ligne de découpe (S) et une butée (6) maintenue sur au moins un élément de guidage (A) de façon articulée autour d'un point de pivotement (X), pouvant être immobilisée en restant longitudinalement mobile à l'aide d'un dispositif de support (1) fixé de façon mobile sur l'élément de guidage (A), **caractérisée en ce qu'**un élément de guidage (A) est fixé sur au moins un chariot (3, 4) pouvant être déplacé parallèlement à la ligne de découpe (S) de la lame de scie.

2. Scie de découpe selon la revendication 1, **caractérisée en ce que** la butée (6) peut être déplacée parallèlement à la ligne de découpe (S) et peut également former un angle avec la ligne de découpe (S).

3. Scie de découpe selon une des deux revendications précédentes, **caractérisée en ce que** le point de pivotement (X) pouvant être déplacé longitudinalement est situé sur le guidage (A) formant en particulier un angle droit avec la ligne de découpe (S) ou **en ce que** le point de pivotement (X) est fixé sur l'élément de guidage (A) alors que la butée (6) peut être déplacée par rapport au point de pivotement (X).

4. Scie de découpe selon une des revendications précédentes, **caractérisée en ce que** la butée (6) peut pivoter de plus de 180° autour du point de pivotement (X) ou **en ce que** la butée peut être déplacée longitudinalement au niveau du point de pivotement (X) et être immobilisée sans être guidée par un autre élément quelconque.

5. Scie de découpe selon une des revendications précédentes, **caractérisée en ce qu'**il existe un système de mesure mesurant, et le cas échéant analysant, au moins l'inclinaison (2) de la butée, la distance entre le point de pivotement et un point de référence situé au niveau de la ligne de découpe ou encore la position relative de la butée.

6. Scie de découpe selon une des revendications précédentes, **caractérisée en ce qu'**un arbre de guidage (9) est situé entre la butée (6) et l'élément de guidage (A) ou le dispositif de support (1).

7. Scie de découpe selon une des revendications précédentes, **caractérisée en ce que** le guidage (A) ou le dispositif de support (1) est lié à l'arbre de guidage (9) par une articulation (5).

8. Scie de découpe selon une des revendications précédentes, **caractérisée en ce que** la butée (6) peut être déplacée sur l'arbre de guidage (9) et/ou **en ce que** l'arbre de guidage (9) peut être déplacé, tout en étant maintenu au niveau de l'articulation (5).

9. Scie de découpe selon une des revendications précédentes, **caractérisée en ce qu'**une table tournante (14) est située au niveau du dispositif de support (1) comportant la butée (6) et pouvant tourner autour d'un axe de rotation, en particulier de 3600.

10. Scie de découpe selon une des revendications précédentes, **caractérisée en ce que** le dispositif de support (1) possède une forme de table comportant une ouverture de guidage circulaire (14/1) située de préférence au centre du dispositif de support (1) et recevant une table tournante (14) ou seulement un segment d'une table semblable pouvant être pivotée à l'intérieur de cette ouverture de guidage (14/1) de 360° et comportant la butée (6) fixée et pouvant être déplacée sur cette table tournante (14).

11. Scie de découpe selon une des revendications précédentes, **caractérisée en ce qu'**au moins un élément d'espacement (6/1, 6/2) orienté vers la table de découpe (I) ou vers la ligne de découpe (S) est prévu au niveau de la butée (6).

12. Scie de découpe selon une des revendications précédentes, **caractérisée en ce qu'**il existe au moins un élément de support (15) sur lequel pose la butée (6) et/ou la pièce à usiner.

13. Scie de découpe selon une des revendications précédentes, **caractérisée en ce que** la butée (6) est guidée par deux éléments de guidage (A, B) séparés par une distance ajustable.

14. Scie de découpe selon la revendication 11, **caractérisée en ce que** chacun des éléments de guidage (A, B) maintiennent la butée (6) à l'aide d'un palier (1, 2) et **en ce que** le ou les éléments de guidage (A, B) peuvent être déplacés et positionnés parallèlement à la ligne de découpe (S).

15. Scie de découpe selon une des revendications précédentes, **caractérisée en ce qu'**un jalon (M), faisant le cas échéant partie d'un système de mesure, est prévu permettant de déterminer la position des éléments de guidage (A, B) et leur espacement ou **en ce que** la distance (W) entre les éléments de guidage (A, B) peut être fixée à l'aide d'un dispositif d'immobilisation.

16. Scie de découpe selon une des revendications précédentes, **caractérisée en ce que** l'élément de guidage (A, B), le dispositif de support (1, 2) et le mouvement de rotation et de déplacement de la butée peuvent être positionnés, en particulier, par un système de contrôle et sont chacun commandés par moteur de telle façon que la commande peut être arrêtée et donc agir comme dispositif d'immobilisation.

17. Scie de découpe selon la revendication 16, **caractérisée en ce que** le système de contrôle comporte un affichage représentant l'angle d'inclinaison (2) de la butée et/ou la position relative de la butée par rapport à la linge de découpe (S).

18. Scie de découpe selon une des revendications précédentes 16 ou 17, **caractérisée en ce que** le système de contrôle agit sur les commandes motorisées en se basant sur les valeurs mesurées du système de mesure, et en respectant des valeurs choisies ou rentrées dans le système de contrôle correspondant à l'angle (2) et/ou à la distance entre la butée et la ligne de découpe, de façon à éviter que la butée soit déplacée dans la ligne de découpe.

19. Scie de découpe selon une des revendications précédentes 16 à 18, **caractérisée en ce qu'**un système de contrôle électronique est prévu et de préférence intégré dans le système de mesure ou dans le système de contrôle de la machine positionnant les éléments de guidage (A, B), les dispositifs de support (1, 2) et la butée (6) et **en ce que** ce système de contrôle électronique saisit et analyse les positions des éléments de guidage (A, B), la distance (W) entre les éléments de guidage (A, B) et les positions des dispositifs de support (1, 2) et de la butée (6).

20. Scie de découpe selon une des revendications précédentes 6 à 8, **caractérisée en ce que** la longueur maximale du chemin de déplacement des arbres de guidage (9) entre leurs positions finales (10, 11) est rentrée dans le système de contrôle comme une constante de la machine ou en ce que l'arbre de guidage (9) n'est utilisé pour l'ajustement de l'angle que lors d'un positionnement au niveau de ses points de déplacement extrêmes (10, 11).

21. Scie de découpe selon la revendication 20, **caractérisée en ce que** l'arbre de guidage (9) comporte un système de mesure et/ou de positionnement individuel.

22. Scie de découpe selon une des revendications précédentes 20 ou 21, **caractérisée en ce que** la dimension de l'arbre de guidage (9) est choisie de façon à ce que l'arbre dépasse au moins la largeur de l'élément de guidage (A, B).

23. Scie de découpe selon une des revendications précédentes, **caractérisée en ce qu'**un système de contrôle de l'angle d'inclinaison est prévu, faisant le cas échéant partie du système de contrôle général, et permettant de déterminer les positions de la butée (6), des dispositifs de support (1, 2) et des éléments de guidage (A, B) en fonction de la distance entre les deux éléments de guidage et l'angle choisi en prenant en compte les positions des arbres de guidage (9) et de l'extrémité avant de la butée ou du point de référence (R).

24. Scie de découpe selon une des revendications précédentes, **caractérisée en ce que** le système de contrôle libère la commande de la lame de la scie seulement lorsque la détermination et le calcul des positions des éléments de guidage (A, B) et des dispositifs de support garantissent que l'extrémité avant de la butée (6) ou le point de référence (R) ne sont pas sur ou au-delà de la ligne de découpe (S) de la lame de scie.

25. Scie de découpe selon une des revendications précédentes, **caractérisée en ce que** la distance entre la fixation (7, 8) de la butée et l'extrémité avant de la butée (6) est stockée comme constante indexée de la machine dans le système de contrôle.

26. Scie de découpe selon une des revendications précédentes, **caractérisée en ce qu'**une butée longitudinale (12) délimitant une longueur est déplacée par une commande motorisée à l'aide d'un système de mesure et de positionnement.
